# EUROPÄISCHE PATENTANMELDUNG

(11) **EP 1 290 929 A2**
(43) Veröffentlichungstag der Anmeldung: **12.03.2003**
(21) Anmeldenummer: 02018306.7
(22) Anmeldetag: 14.08.2002
(51) Int. Cl.: A01B 69/02, A01B 69/00

(54) **Verfahren und Vorrichtung zum Führen mindestens eines Werkzeuges**

(30) Priorität: 07.09.2001 DE 10143856
(71) Anmelder: ERO-GERÄTEBAU GmbH, 55469 Niederkumbd (DE)
(72) Erfinder: Petry, Willi, 56290 Uhler (DE); Schimmel, Georg, 56290 Gödenroth (DE); Elsen, Franz, 56290 Schnellbach (DE)
(74) Vertreter: Podszus, Burghart, Dipl.-Phys., Dipl.-Wirtsch.-Ing.

(57) **Zusammenfassung**

Die Erfindung betrifft ein Verfahren und eine Vorrichtung zum Führen mindestens eines Werkzeuges (10, 11) in bezug auf eine mittels Drähten (1) spalierte Kultur, wobei in einem als Führungsdraht ausgewählten Draht mittels eines sich periodisch ändernden Magnetfeldes ein Strom induziert wird, der ein sekundäres Magnetfeld um den Führungsdraht (1) herum erzeugt, das dann mit Hilfe von mindestens zwei auf gegenüberliegenden Seiten des Führungsdrahtes (1) befindlichen Magnetfeldsensoren (12, 13) gemessen wird, deren Meßwerte anschließend mit Hilfe einer elektronischen Steuereinrichtung (17) zu Steuersignalen weiterverarbeitet werden.

Um zu erreichen, daß das Werkzeug (10, 11) auf einfache Weise auch dann automatisch entlang eines als Führungsdraht ausgewählten Drahtes (1) nachführbar ist, wenn die Magnetfeldsensoren (12, 13) mit den Nutzsignalen Störsignale empfangen, die zwar eine größere Feldstärke, aber eine unterschiedliche Phase aufweisen als die Nutzsignale, schlägt die Erfindung vor, die Störsignale mit Hilfe eines phasenempfindlichen Gleichrichters (18, 19) aus dem empfangenen Signalgemisch herauszufiltern, indem ein mit dem Störsignal frequenzgleiches Referenzsignal, aber entsprechender Phasenverschiebung, dem Gleichrichter (18,19) zugeführt wird.

## Beschreibung

Die Erfindung betrifft ein Verfahren zum Führen mindestens eines Werkzeuges in bezug auf eine mittels Drähten spalierte Kultur. Die Erfindung bezieht sich ferner auf eine Vorrichtung zur Durchführung des Verfahrens.

Bei in Reihen angelegten Pflanzenkulturen, insbesondere von Weinstöcken und Obstbäumen, erfolgt z.B. das Spritzen und Beschneiden der Pflanzen häufig mittels an Traktoren angeordneten Spezialwerkzeugen. Dabei muß die jeweilige in bezug auf die Pflanzen einzuhaltende Werkzeugposition üblicherweise von dem die Reihen abfahrenden Fahrer des Traktors selbst manuell nachgeführt werden.

Aus der nicht vorveröffentlichten PCT- Anmeldung PCT/FR01/01396 ist bereits ein Verfahren bekannt, mit dessen Hilfe z.B. die Werkzeuge zum Beschneiden der Pflanzen automatisch nachgeführt werden können. Hierzu wird ein elektromagnetisches Feld an einem der Spalierdrähte (Führungsdraht) erzeugt und die Werkzeugposition in Abhängigkeit von den mittels entsprechenden Sensoren gemessenen Meßwerten des elektromagnetischen Feldes verstellt. Zur Erzeugung des elektromagnetischen Feldes an dem Führungsdraht wird entweder eine gepulste Stromquelle mit den Enden des Führungsdrahtes verbunden oder es wird mit Hilfe eines Hochfrequenzsenders mit einer Frequenz zwischen 3 und 20 MHz ein entsprechender Strom in dem Führungsdraht induziert.

Dieses bekannte Verfahren weist indessen verschiedene Nachteile auf. So ist es im Falle der Einspeisung eines gepulsten Stromes in den Führungsdraht erforderlich, die jeweilige Stromquelle zunächst mit dem Führungsdraht zu verbinden, und zwar derart, daß ein geschlossener elektrischer Kreis entsteht. Sofern die Spalierpfosten aus Metall bestehen sollten, müssen die Führungsdrähte außerdem zunächst relativ zeitaufwendig an den Pfosten elektrisch isoliert befestigt werden.

Bei Verwendung eines Hochfrequenzsenders ergibt sich das Problem, daß jedenfalls dann, wenn der Sender in der Nähe der Sensoren angeordnet ist (z.B. an dem Traktor oder der Haltevorrichtung der Sensoren), die von dem Hochfrequenzsender abgestrahlten elektromagnetischen Wellen nicht nur in dem Führungsdraht einen Induktionsstrom induzieren, der dann ein elektromagnetisches Feld um den Führungsdraht erzeugt, sondern auch direkt von den Sensoren empfangen werden. Diese direkt von den Sensoren empfangenen elektromagnetischen Wellen (Störsignale) besitzen Feldstärkenwerte am Ort der Sensoren, die nicht selten um mehrere Zehnerpotenzen über den relativ schwachen Feldstärkewerten liegen, welche durch die in dem Führungsdraht induzierten Ströme verursacht werden (Nutzsignale). Die eigentlichen Nutzsignale verschwinden daher häufig im Rauschen der durch die direkte Einstrahlung verursachten Störsignale.

Der Erfindung liegt die Aufgabe zugrunde, ein Verfahren der eingangs erwähnten Art anzugeben, mit dem Werkzeuge auch dann auf einfache Weise automatisch entlang eines als Führungsdraht ausgewählten Drahtes einer spalierten Kultur nachführbar sind, wenn zusätzlich zu den Nutzsignalen relativ große Störsignale auftreten. Die Erfindung soll ferner eine Vorrichtung zur Durchführung des Verfahrens offenbaren.

Diese Aufgabe wird hinsichtlich des Verfahrens erfindungsgemäß durch die Merkmale des Anspruchs 1 und hinsichtlich der Vorrichtung durch die Merkmale des Anspruchs 4 gelöst. Weitere, besonders vorteilhafte Ausgestaltungen der Erfindung offenbaren die Unteransprüche.

Die Erfindung beruht im wesentlichen auf dem Gedanken, daß Störsignale, die gegenüber Nutzsignalen eine unterschiedliche Phase aufweisen, auf einfache Weise dadurch herausgefiltert werden können, wenn die empfangenen Signale einem phasenempfindlichen Gleichrichter zugeführt werden, an dessen Referenzeingang ein mit dem Störsignal frequenzgleiches Referenzsignal anliegt, welches gegenüber diesem Signal eine Phasenverschiebung aufweist, derart, daß sich für das Störsignal ein mittlerer Spannungswert am Ausgang des Gleichrichters von Null ergibt.

Als besonders vorteilhaft hat es sich erwiesen, wenn zur Erzeugung eines induzierten Wechselstromes in dem Spalierdraht nicht ein Hochfrequenzsender verwendet wird, sondern eine Einrichtung, mit welcher ein sich zeitlich änderndes niederfrequentes Magnetfeld (z.B. mit einer Frequenz zwischen 500 Hz und 10 KHz) erzeugt wird. In diesem Fall weisen die von dem primären Magnetfeld (Magnetfeld, welches zur Erzeugung des Wechselstromes in dem Führungsdraht dient) stammenden Störsignale gegenüber den von dem sekundären Magnetfeld (Magnetfeld, welches durch den Wechselstrom in dem Führungsdraht erzeugt wird) herrührenden Nutzsignalen eine Phasendifferenz von etwa 90° auf, so daß das vorstehend erwähnte Verfahren vorteilhafterweise zum Herausfiltern dieser Störsignale benutzt werden kann.

Bei Verwendung eines Hochfrequenzsenders könnten hingegen die Störsignale mit einem phasenempfindlichen Gleichrichter nicht mehr unterdrückt werden, weil in diesem Falle -anders als bei Verwendung von niederfrequenten Magnetfeldern- die durch die Belaubung bedingten Kapazitäten berücksichtigt werden müssen, welche sich abhängig von der Art der Belaubung bei der Zeilendurchfahrt ständig ändern können.

Um den Einfluß der Induktivität des Führungsdrahtes (bzw. des bei der Messung erforderlichen Drahtrahmens) gering zu halten, sollte die Frequenz derart gewählt werden, daß der ohmsche Widerstand des Führungsdrahtes größer ist als der induktive Widerstand.

Weitere Einzelheiten und Vorteile der Erfindung ergeben sich aus den folgenden anhand von Figuren erläuterten Ausführungsbeispielen. Es zeigen:
Fig.1 die schematische Darstellung eines zwischen Drähten einer spalierten Kultur fahrenden und mit einer erfindungsgemäßen Vorrichtung versehenen Traktors;
Fig.2 die perspektivische Ansicht einer Haltevorrichtung, an der sowohl nachzuführende Werkzeuge als auch Magnetfeldsensoren und eine Einrichtung zur Erzeugung eines sich ändernden Magnetfeldes angeordnet sind;
Fig.3 das Blockschaltbild einer erfindungsgemäßen Vorrichtung;
Fig.4-9 die auf den jeweiligen Amplitudenwert normierten Strom- bzw. Spannungsverläufe an unterschiedlichen Orten der erfindungsgemäßen Vorrichtung zur Erläuterung deren Wirkungsweise.

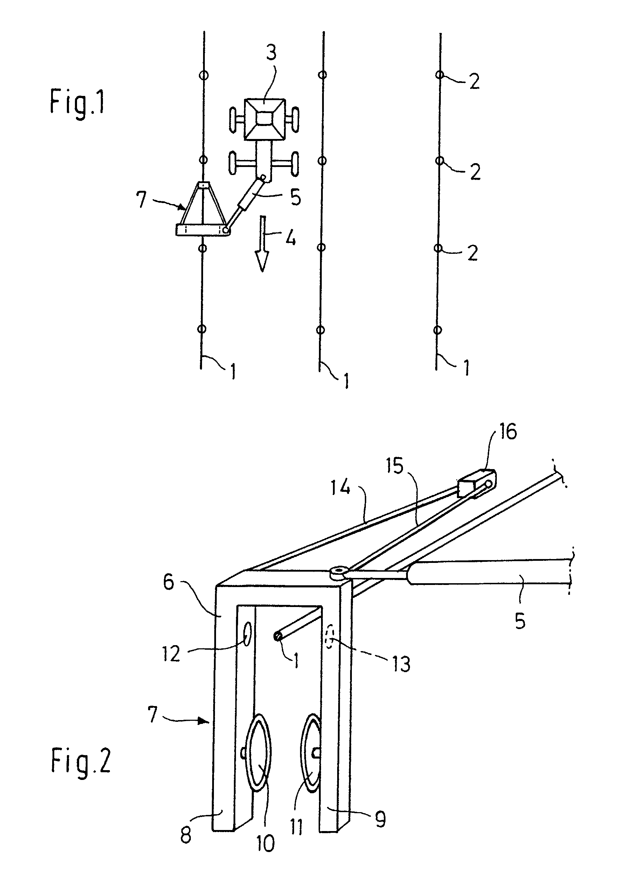

In Fig.1 ist mit 1 der jeweils obere als Führungsdraht verwendete Spalierdraht einer in Reihen angelegten Pflanzkultur bezeichnet, der an entsprechenden Pfosten 2 befestigt ist. Zwischen zwei benachbarten Reihen fährt ein Traktor 3 in Richtung des mit 4 bezeichneten Pfeiles, der an seinem vorderen Ende über eine z.B. hydraulische Einstelleinrichtung 5 mit einer einen U-förmigen Rahmen 6 umfassenden Haltevorrichtung 7 verbunden ist (Fig.2). Die beiden Schenkel 8, 9 des Rahmens 6 umschließen seitlich den Führungsdraht 1.

An den beiden Schenkeln 8, 9 sind sowohl zwei Werkzeuge 10, 11 zum Schneiden seitlicher Triebe der entsprechenden, nicht dargestellten Pflanzen als auch in Höhe des Führungsdrahtes 1 zwei gegenüberliegende Magnetfeldsensoren 12, 13 angeordnet. Außerdem ist an dem Rahmen 6 über zwei Auslegerarme 14, 15 eine Einrichtung 16 zur Erzeugung eines sich mit einer Frequenz von z.B. 1 KHz ändernden Magnetfeldes befestigt.

Bei den beiden Magnetfeldsensoren 12, 13 handelt es sich vorzugsweise um induktive Sensoren, da die gemessenen Feldstärken im Nano-Tesla-Bereich liegen, die mit herkömmlichen Hall-Sensoren nicht mehr gemessen werden können.

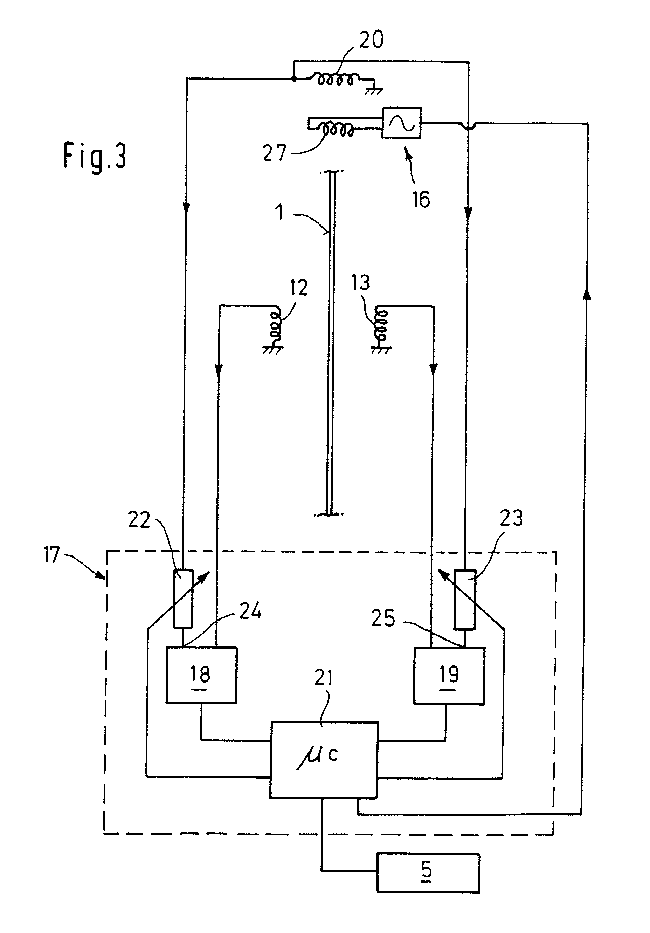

Sowohl die Magnetfeldsensoren 12, 13 als auch die Einrichtung 16 zur Erzeugung des Magnetfeldes sind mit einer elektronischen Steuereinrichtung 17 verbunden, die z.B. an dem Traktor 3 oder an dem Rahmen 6 befestigt sein kann und dessen Blockschaltbild in Fig. 3 wiedergegeben ist.

Im wesentlichen besteht die elektronische Steuereinrichtung 17 aus zwei an sich bekannten phasenempfindlichen Gleichrichtern 18, 19 (vgl. auch U. Tietze, Ch. Schenk: "Halbleiter-Schaltungstechnik", 10. Auflage; Springer Verlag, Seiten 880 ff.), die jeweils mit einem Magnetfeldsensor 12, 13 und mit einer Referenzspule 20 verbunden sind, sowie einem den Gleichrichtern 18, 19 nachgeschalteten Mikrokontroller 21. Der Mikrokontroller 21 dient sowohl zur Erzeugung von Steuersignalen in Abhängigkeit von den Ausgangssignalen der Gleichrichter 18, 19 als auch zum Abgleich von zwei Phasenschiebern 22, 23, die jeweils dem Referenzeingang 24, 25 des entsprechenden Gleichrichters 18, 19 vorgeschaltetet sind. Außerdem wird auch die Einrichtung 16 zur Erzeugung des Magnetfeldes von dem Mikrokontroller 21 angesteuert.

Nachfolgend wird näher auf die Wirkungsweise der Erfindung eingegangen. Dabei werden zunächst die Enden des Führungsdrahtes 1 mit einem zweiten Spalierdraht (nicht dargestellt; vorzugsweise dem untersten Spalierdraht) elektrisch verbunden, so daß sich ein Drahtrahmen und damit ein geschlossener Stromkreis ergibt. Sofern als Pfosten Metallpfosten verwendet werden, kann auf eine zusätzliche elektrische Verbindung der Enden des Führungsdrahtes 1 verzichtet werden. Anschließend wird dann die Steuereinrichtung 17 in Betrieb genommen.

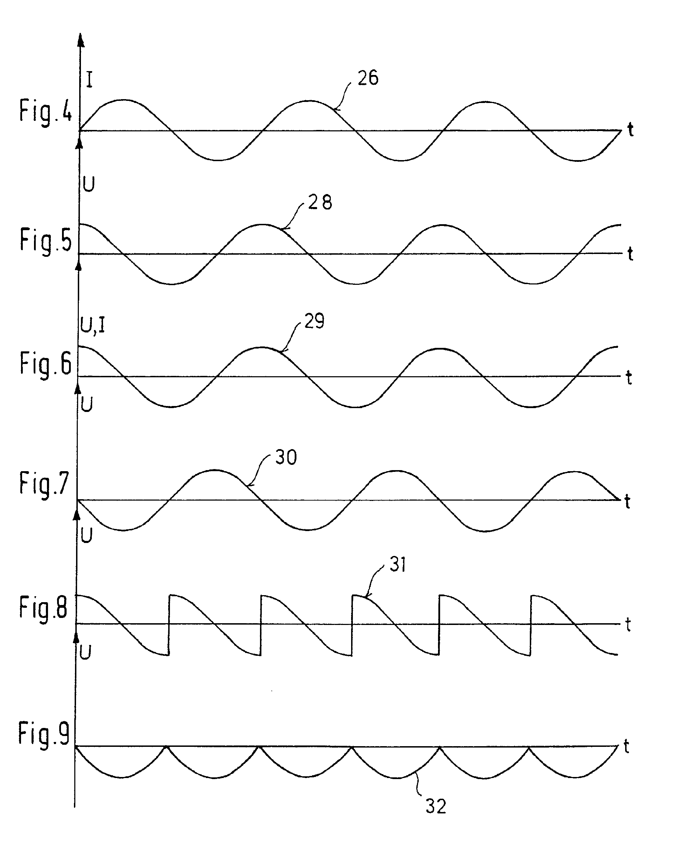

Fig.4 zeigt den Stromverlauf 26 in der Erregerspule 27 (Fig.3) der Einrichtung 16. Durch diesen Strom wird einerseits in den Magnetfeldsensoren 12, 13 jeweils ein um 90° phasenverschobener Störspannungsverlauf 28 (Fig.5) und andererseits in dem Führungsdraht 1 ein um 90° phasenverschobener Spannungsverlauf 29 (Fig.6) induziert. Der Spannungsverlauf 29 führt in dem Führungsdraht 1 zu einem gleichphasigen Stromverlauf. Dieser Strom erzeugt dann seinerseits ein sich zeitlich änderndes Magnetfeld um den Führungsdraht 1 herum, so daß die beiden Magnetfeldsensoren 12, 13 jeweils einen entsprechenden Nutzspannungsverlauf 30 messen, welcher um 90° gegenüber der Phase des Stromes bzw. der Spannung in dem Führungsdraht 1 und damit auch gegenüber der Phase der Störspannung 28 phasenverschoben ist (Fig.7).

Um bei Durchführung des erfindungsgemäßen Verfahrens den Einfluß der Störspannung zu unterdrücken, wird zunächst in einer Stellung, bei welcher nur Stör- und keine Nutzsignale von den Magnetfeldsensoren 12, 13 empfangen werden, mittels des Mikrokontrollers 21 (Fig.3) die Phasenschieber 22, 23 so lange verstellt, bis am Ausgang des entsprechenden Gleichrichters 18, 19 keine Spannung auftritt. Dieses ist dann der Fall, wenn (bei gleicher Frequenz der Signale) eine Phasenverschiebung von 90° zwischen den Spannungen besteht, die an dem Meß- und dem Referenzeingang des jeweiligen Gleichrichters 18, 19 anliegen. Es ergibt sich dann am Ausgang des jeweiligen Gleichrichters 18, 19 der in Fig.8 dargestellte Störspannungsverlauf 31, dessen Mittelwert gleich Null ist.

Mit diesen Stellungen der Phasenschieber 22, 23 wird anschließend die Haltevorrichtung 7 in ihre Betriebsposition gebracht und die sich ergebenden gleichgerichteten Nutzspannungsverläufe 32 (Fig.9) werden mittels des Mikrokontrollers 21 ausgewertet. Sofern die Differenz der gemessenen Magnetfeldstärken und damit der beiden gleichgerichteten Nutzspannungen einen vorgegebenen Sollwert überschreitet, erzeugt der Mikrokontroller 21 ein Stellsignal, welches auf die Einstelleinrichtung 5 wirkt (Fig.3). Diese verschiebt bzw. verschwenkt dann die Haltevorrichtung 7 (Fig.2) so lange seitlich, bis die Differenz der gemessenen Magnetfeldstärken kleiner oder gleich dem Sollwert ist, so daß beide Sensoren 12, 13 (und damit auch die Werkzeuge 10, 11) etwa den gleichen seitlichen Abstand von dem Führungsdraht 1 (bzw. den nicht dargestellten Pflanzen) besitzen.

Die Erfindung ist selbstverständlich nicht auf das vorstehend beschriebene Ausführungsbeispiel beschränkt. So können für eine genaue Führung der Werkzeuge statt zwei gegenüberliegender Magnetfeldsensoren auch vier, sechs oder noch mehr Sensoren verwendet werden. Die Einrichtung 16 zur Erzeugung des Magnetfeldes kann statt über Ausleger an der Haltevorrichtung 7 auch an dem Traktor 3 oder einem entsprechenden Fahrzeug befestigt sein.

Ferner kann als Einstelleinrichtung statt eines hydraulischen Antriebes auch ein elektrischer Antrieb verwendet werden.

### Bezugszeichenliste

- 1: Führungsdraht, Draht
- 2: Pfosten
- 3: Traktor, landwirtschaftliches Fahrzeug
- 4: Pfeil
- 5: Einstelleinrichtung
- 6: Rahmen
- 7: Haltevorrichtung
- 8,9: Schenkel
- 10,11: Werkzeuge
- 12,13: Magnetfeldsensoren, Sensoren
- 14,15: Auslegerarme
- 16: Einrichtung
- 17: (elektronische) Steuereinrichtung
- 18,19: (phasenempfindlicher) Gleichrichter
- 20: Referenzspule
- 21: Mikrokontroller
- 22,23: Phasenschieber
- 24,25: Referenzeingang
- 26: Stromverlauf (in der Erregerspule)
- 27: Erregerspule
- 28: Störspannungsverlauf (am Eingang des Gleichrichters)
- 29: Spannungsverlauf (in dem Führungsdraht), Strom
- 30: Nutzspannungsverlauf (am Eingang des Gleichrichters)
- 31: Störspannungsverlauf (am Ausgang des Gleichrichters)
- 32: Nutzspannungsverlauf (am Ausgang des Gleichrichters)

## Patentansprüche

1. Verfahren zum Führen mindestens eines Werkzeuges (10, 11) in bezug auf eine mittels Drähten (1) spalierte Kultur mit den Merkmalen:
a) in einem als Führungsdraht ausgewählten Draht (1) der spalierten Kultur wird mittels eines sich periodisch ändernden primären Magnetfeldes ein Strom (29) induziert;
b) die durch den induzierten Strom (29) um den Führungsdraht (1) herum sich ergebenden Feldstärken eines sekundären Magnetfeldes werden durch mindestens zwei an einer Haltevorrichtung (7) des Werkzeuges (10, 11) angeordneten und auf gegenüberliegenden Seiten des Führungsdrahtes (1) befindlichen Magnetfeldsensoren (12, 13) gemessen und miteinander verglichen;
c) sofern die Differenz der mit den beiden Magnetfeldsensoren (12, 13) gemessenen Nutzsignale einen vorgegebenen Sollwert überschreitet, wird die Haltevorrichtung (7) des Werkzeuges (10, 11) mittels einer Einstelleinrichtung (5) seitlich so lange verschoben oder verschwenkt, bis die Differenz der jeweils gemessenen Nutzsignale kleiner oder gleich dem Sollwert ist.
d) die ebenfalls von den Magnetfeldsensoren (12, 13) gemessenen Störsignale, die gegenüber den Nutzsignalen eine unterschiedliche Phase aufweisen, werden mittels eines phasenempfindlichen Gleichrichters (18, 19) unterdrückt, wobei als Referenzsignal ein mit dem Störsignal frequenzgleiches Signal verwendet wird, welches aber eine unterschiedliche Phase aufweist, derart, daß sich für das Störsignal ein mittlerer Spannungswert am Ausgang des Gleichrichters (18, 19) von Null ergibt.

2. Verfahren nach Anspruch 1, **dadurch gekennzeichnet, daß** die Frequenz des sich zeitlich ändernden primären Magnetfeldes < 20 KHz, vorzugsweise zwischen 500 Hz und 10 KHz gewählt wird.

3. Verfahren nach Anspruch 1 oder 2, **dadurch gekennzeichnet, daß** bei Störsignalen, die durch die direkte Einkopplung des primären Magnetfeldes in die Magnetfeldsensoren entstehen, als Referenzsignal ein von dem primären Magnetfeld abgeleitetes Signal verwendet wird, dessen Phase in bezug auf die Phase des Störsignales mit Hilfe eines Phasenschiebers einstellbar ist.

4. Vorrichtung zum Führen mindestens eines Werkzeuges (10, 11) in bezug auf eine mittels Drähten (1) spalierte Kultur mit den Merkmalen:
die Vorrichtung umfaßt
e) eine Einrichtung (16) zur Erzeugung eines sich periodisch ändernden primären Magnetfeldes, welche in der Nähe eines als Führungsdraht ausgewählten Drahtes (1) der spalierten Kultur anordbar ist, derart, daß in dem Führungsdraht (1) ein Strom (29) induziert wird, welcher seinerseits um den Führungsdraht (1) herum ein sekundäres Magnetfeld erzeugt;
f) eine elektronische Steuereinrichtung (17) und mindestens zwei mit dieser verbundene Magnetfeldsensoren (12, 13), die auf gegenüberliegenden Seiten von dem Führungsdraht (1) an einer Haltevorrichtung (7) befestigt sind, wobei die Steuereinrichtung (17) die Magnetfeldstärke am Ort der beiden Magnetfeldsensoren (12, 13) ermittelt und ein Stellsignal erzeugt, welches auf eine mit der Haltevorrichtung (7) verbundene Einstelleinrichtung (5) wirkt, sofern die Differenz der gemessenen Magnetfeldstärken einen vorgegebenen Sollwert überschreitet, und wobei die Einstelleinrichtung (5) die Haltevorrichtung (7) des Werkzeuges (10, 11) seitlich so lange verschiebt oder verschwenkt, bis die Differenz der gemessenen Magnetfeldstärken kleiner oder gleich dem Sollwert ist;
g) mindestens zwei den Magnetfeldsensoren (12, 13) nachgeschaltete phasenempfindliche Gleichrichter (18, 19) zur Unterdrückung der ebenfalls von den Magnetfeldsensoren (12, 13) gemessenen Störsignale, die gegenüber den Nutzsignalen eine unterschiedliche Phase aufweisen, wobei als Referenzsignal ein mit dem Störsignal frequenzgleiches Signal verwendet wird, welches aber eine unterschiedliche Phase aufweist, derart, daß sich für das Störsignal ein mittlerer Spannungswert am Ausgang des Gleichrichters (18, 19) von Null ergibt.

5. Vorrichtung nach Anspruch 4, **dadurch gekennzeichnet, daß** bei Störsignalen, die durch die direkte Einkopplung des primären Magnetfeldes in die Magnetfeldsensoren (12, 13) entstehen, als Referenzsignal ein von dem primären Magnetfeld mittels einer Referenzspule (20) abgeleitetes Signal verwendet wird, dessen Phase in bezug auf die Phase des Störsignales mit Hilfe eines Mikrokontroller (21) gesteuerten Phasenschiebers (22, 23) einstellbar ist.

6. Vorrichtung nach Anspruch 4 oder 5, **dadurch gekennzeichnet, daß** die Einrichtung (16) ein sich mit einer Frequenz < 20 KHz, vorzugsweise zwischen 500 Hz und 10 kHz änderndes Magnetfeld erzeugt.

7. Vorrichtung nach einem der Ansprüche 4 bis 6, **dadurch gekennzeichnet, daß** die Haltevorrichtung (7) einen U-förmig ausgebildeten Rahmen (6) umfaßt, wobei an jedem Schenkel (8, 9) des Rahmens (6) mindestens ein Werkzeug (10, 11) und ein Magnetfeldsensor (12, 13) angeordnet ist, und daß die Haltevorrichtung (7) über die Einstelleinrichtung (5) mit einem landwirtschaftlichen Fahrzeug (3) verbunden ist.

8. Vorrichtung nach Anspruch 7, **dadurch gekennzeichnet, daß** die Einrichtung (16) zur Erzeugung des Magnetfeldes an mindestens einem Auslegerarm (14, 15) oberhalb des Führungsdrahtes (1) befestigt ist, und daß der Auslegerarm (14, 15) an der Haltevorrichtung (7) oder an dem landwirtschaftlichen Fahrzeug (3) befestigt ist.
